# EUROPEAN PATENT APPLICATION

(11) **EP 4 773 697 A1**
(43) Date of publication of application: **08.07.2026**
(21) Application number: 25227868.4
(22) Date of filing: 31.12.2025
(51) Int. Cl.: H04W 72/12, H04W 84/12, H04W 88/06

(54) **METHOD AND APPARATUS FOR TRIGGERING WI-FI NON-PRIMARY CHANNEL ACCESS MECHANISM ACCORDING TO TIMING PROFILE OF SCHEDULED TRAFFIC OF NON-WI-FI WIRELESS COMMUNICATION DEVICE**

(30) Priority: 02.01.2025 US 202563741165 P; 30.12.2025 US 202519437235
(71) Applicant: MediaTek Inc., Hsinchu City 30078 (TW)
(72) Inventor: LU, Yen-Shuo, 30078 Hsinchu City (TW); LIN, Yi-Chiao, 30078 Hsinchu City (TW); CHEN, Kuo-Wei, 30078 Hsinchu City (TW); CHEN, Kuo-Ming, 30078 Hsinchu City (TW)
(74) Representative: Haseltine Lake Kempner LLP

(57) **Abstract**

A Wi-Fi device (112, 104) includes a wireless interface circuit (134, 124) and a control circuit (132, 122). The control circuit (132, 122) receives a timing profile of scheduled traffic of a non-Wi-Fi wireless communication device (114), and refers to the timing profile to instruct the wireless interface circuit (134, 124) to transmit at least one frame for triggering a non-primary channel access mechanism between the Wi-Fi device (112, 104) and another Wi-Fi device (104, 112).

## Description

### Field of the Invention

The present invention relates to wireless communications, and more particularly, to a Wi-Fi device for triggering a non-primary channel access (NPCA) mechanism according to a timing profile of scheduled traffic of a non-Wi-Fi wireless communication device and a related Wi-Fi NPCA method.

### Background of the Invention

Wireless local area network (WLAN) is a network that uses wireless communication technology (e.g., Wi-Fi technology) to transmit/receive data within a limited range. Hence, a WLAN system may include a plurality of WLAN devices such as Wi-Fi devices including at least one access point (AP) and at least one non-AP station (STA) . With development of the Wi-Fi technology, new features are proposed to enhance the transmit/receive (TX/RX) performance. For example, a modern mobile phone can support cellular and non-cellular wireless communication standards at the same time. This means that subsystems operate in very close proximity to each other within a single device (also called in-device coexistence (IDC)), leading to considerable IDC interference. Thus, there is a need for an innovative design for preventing or mitigating in-band collision between a Wi-Fi device and a non-Wi-Fi wireless communication device (e.g., a Bluetooth (BT) device or a cellular device) co-existing in a single electronic device.

### Summary of the Invention

This in mind, the present invention aims at providing a Wi-Fi device for triggering an NPCA mechanism according to a timing profile of scheduled traffic of a non-Wi-Fi wireless communication device and a related Wi-Fi NPCA method.

This is achieved by a Wi-Fi device and a Wi-Fi NPCA method according to independent claims. The dependent claims pertain to corresponding further developments and improvements.

As will be seen more clearly from the detailed description following below, the claimed Wi-Fi device includes a wireless interface circuit and a control circuit. The control circuit is configured to receive a timing profile of scheduled traffic of a non-Wi-Fi wireless communication device, and refer to the timing profile to instruct the wireless interface circuit to transmit at least one frame for triggering an NPCA mechanism between the Wi-Fi device and another Wi-Fi device. The claimed Wi-Fi NPCA method includes: receiving, by a first Wi-Fi device, a timing profile of scheduled traffic of a non-Wi-Fi wireless communication device; and referring to the timing profile to transmit at least one frame from the first Wi-Fi device for triggering an NPCA mechanism between the first Wi-Fi device and a second Wi-Fi device.

### Brief Description of the Drawings

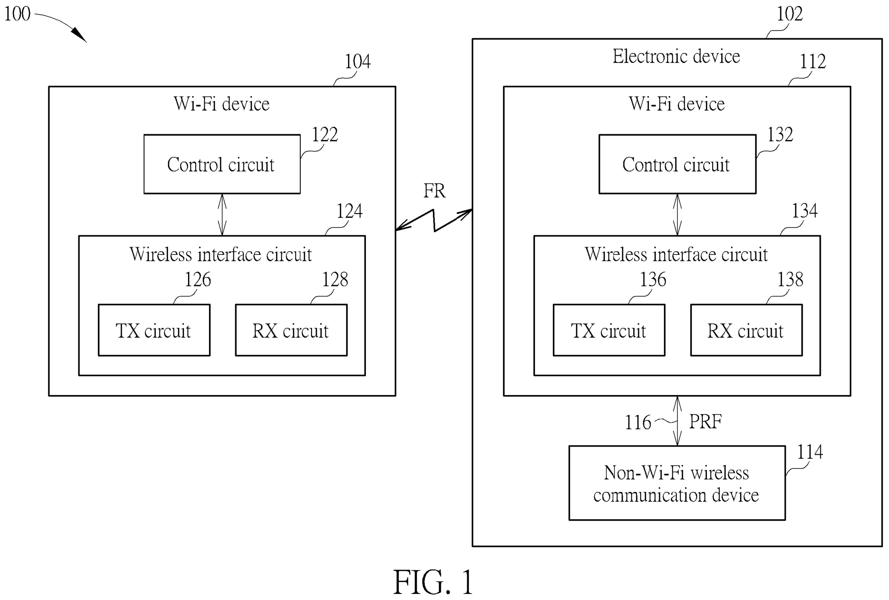

In the following, the invention is further illustrated by way of example, taking reference to the accompanying drawings. Thereof FIG. 1 is a diagram illustrating a wireless communication system according to an embodiment of the present invention,
FIG. 2 is a diagram illustrating a first timing profile aided NPCA triggering design according to an embodiment of the present invention,
FIG. 3 is a diagram illustrating a second timing profile aided NPCA triggering design according to an embodiment of the present invention,
FIG. 4 is a diagram illustrating a third timing profile aided NPCA triggering design according to an embodiment of the present invention,
FIG. 5 is a diagram illustrating a fourth timing profile aided NPCA triggering design according to an embodiment of the present invention,
FIG. 6 is a diagram illustrating a fifth timing profile aided NPCA triggering design according to an embodiment of the present invention,
FIG. 7 is a diagram illustrating a sixth timing profile aided NPCA triggering design according to an embodiment of the present invention, and
FIG. 8 is a diagram illustrating an electronic device according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

FIG. 1 is a diagram illustrating a wireless communication system according to an embodiment of the present invention. The wireless communication system 100 includes an electronic device 102 and a Wi-Fi device 104. The electronic device 102 includes a Wi-Fi device 112 and a non-Wi-Fi wireless communication device 114. The Wi-Fi device 112 and the non-Wi-Fi wireless communication device 114 co-exist in the same electronic device 102. In this embodiment, the Wi-Fi device 112 is part of a first wireless communication subsystem of the electronic device 102, and the non-Wi-Fi wireless communication device 114 is part of a second wireless communication subsystem of the electronic device 102, where the second wireless communication subsystem is different from the first wireless communication subsystem. For example, the second wireless communication subsystem may be a scheduling narrow band subsystem capable of operating on 2.4GHz/5Ghz/6Ghz band, and the first wireless communication subsystem is a WLAN subsystem also capable of operating on 2.4GHz/5Ghz/6Ghz band. In some embodiments of the present invention, the non-Wi-Fi wireless communication device 114 may be a BT device in compliance with a BT specification such as a BT Low Energy (BLE) specification. In some embodiments of the present invention, the non-Wi-Fi wireless communication device 114 may be a cellular device in compliance with a 3^{rd} Generation Partnership Project (3GPP) specification.

The Wi-Fi device 104 is external to the electronic device 102, and is a peer device of the Wi-Fi device 112 included in the electronic device 102. Both of the Wi-Fi devices 104 and 112 are incompliance with a Wi-Fi specification such as an 802.11bn (Wi-Fi 8) specification or a next-generation Wi-Fi specification. The Wi-Fi devices 104 and 112 may have the same or similar circuit structure. As shown in FIG. 1, the Wi-Fi device 104 includes a control circuit 122 and a wireless interface circuit 124, where the wireless interface circuit 124 includes a transmit (TX) circuit 126 and a receive (RX) circuit 128. The control circuit 122 is configured to control wireless communications with the Wi-Fi device 112. For example, the control circuit 122 may be implemented using a processor. In a case where the Wi-Fi device 104 is an access point (AP) and the Wi-Fi device 112 is a non-AP station (STA), the control circuit 122 controls the TX circuit 126 to deal with downlink (DL) traffic between AP and non-AP STA, and controls the RX circuit 128 to deal with uplink (UL) traffic between AP and non-AP STA. In another case where the Wi-Fi device 104 is a non-AP STA and the Wi-Fi device 112 is an AP, the control circuit 122 controls the TX circuit 126 to deal with UL traffic between AP and non-AP STA, and controls the RX circuit 128 to deal with DL traffic between AP and non-AP STA.

As shown in FIG. 1, the Wi-Fi device 112 includes a control circuit 132 and a wireless interface circuit 134, where the wireless interface circuit 134 includes a TX circuit 136 and an RX circuit 138. The control circuit 132 is configured to control wireless communications with the Wi-Fi device 104. For example, the control circuit 132 may be implemented using a processor. In a case where the Wi-Fi device 112 is an AP and the Wi-Fi device 104 is a non-AP STA, the control circuit 132 controls the TX circuit 136 to deal with DL traffic between AP and non-AP STA, and controls the RX circuit 138 to deal with UL traffic between AP and non-AP STA. In another case where the Wi-Fi device 112 is a non-AP STA and the Wi-Fi device 104 is an AP, the control circuit 132 controls the TX circuit 136 to deal with UL traffic between AP and non-AP STA, and controls the RX circuit 138 to deal with DL traffic between AP and non-AP STA.

In this embodiment, both of Wi-Fi devices 104 and 112 support a Wi-Fi NPCA mechanism which is triggered based on a timing profile PRF of scheduled traffic of the non-Wi-Fi wireless communication device (e.g., BT device or cellular device) 114. Since the non-Wi-Fi wireless communication device 114 and the Wi-Fi device 112 co-exist in the same electronic device 102, the non-Wi-Fi wireless communication device 114 may exchange some system information with the Wi-Fi device 112 through a wired interface 116. For example, the wired interface 116 may be a WCI-2 coexistence interface. In some embodiments of the present invention, the Wi-Fi device 112 acts as an initiator for triggering the NPCA mechanism between Wi-Fi devices 104 and 112, and the non-Wi-Fi wireless communication device 114 provides the timing profile PRF to the Wi-Fi device 112 via the wired interface 116. In some embodiments of the present invention, the Wi-Fi device 104 acts as an initiator for triggering the NPCA mechanism between Wi-Fi devices 104 and 112, the non-Wi-Fi wireless communication device 114 provides the timing profile PRF to the Wi-Fi device 112 via the wired interface 116, and the Wi-Fi device 112 informs the Wi-Fi device 104 of the timing profile PRF by transmitting an initial control frame (ICF) (which carries the timing profile PRF) to the Wi-Fi device 104.

The Wi-Fi devices 104 and 112 include an AP and a non-AP STA. In accordance with the proposed timing profile aided NPCA triggering design, the NPCA mechanism between the Wi-Fi devices 104 and 112 is initiated/triggered by one of the Wi-Fi devices 104 and 112. In a case where the NPCA mechanism is initiated/triggered by the Wi-Fi device (AP or non-AP STA) 104, the control circuit 122 is configured to receive the timing profile PRF of scheduled traffic of the non-Wi-Fi wireless communication device (e.g., BT device or cellular device) 114 through the wireless interface circuit 124 (particularly, RX circuit 128 of wireless interface circuit 124), and refer to the timing profile PRF to instruct the wireless interface circuit 124 (particularly, TX circuit 126 of wireless interface circuit 124) to transmit at least one frame FR for triggering the NPCA mechanism between Wi-Fi devices 104 and 112. In another case where the NPCA mechanism is initiated/triggered by the Wi-Fi device (AP or non-AP STA) 112, the control circuit 132 is configured to receive the timing profile PRF of scheduled traffic of the non-Wi-Fi wireless communication device (e.g., BT device or cellular device) 114 through the wired interface 116, and refer to the timing profile PRF to instruct the wireless interface circuit 134 (particularly, TX circuit 136 of wireless interface circuit 134) to transmit at least one frame FR for triggering the NPCA mechanism between Wi-Fi devices 104 and 112. Further details of the proposed timing profile aided NPCA triggering design are described as below with reference to the accompanying drawings.

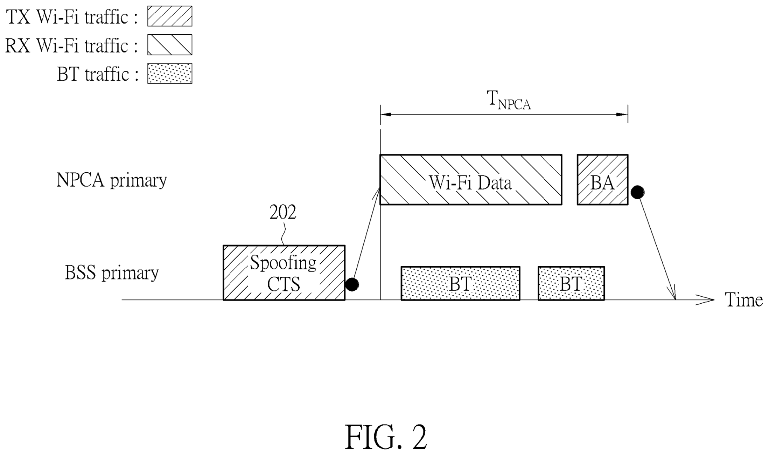

FIG. 2 is a diagram illustrating a first timing profile aided NPCA triggering design according to an embodiment of the present invention. In this embodiment, the Wi-Fi device (e.g., non-AP STA) 112 may trigger/initiate the NPCA mechanism between Wi-Fi devices 104 and 112, and the non-Wi-Fi wireless communication device 114 may be a BT device. Hence, the first timing profile aided NPCA triggering design is used to enable frequency division duplexing (FDD) for BT traffic and Wi-Fi traffic during an NPCA period T_{NPCA}. In accordance with the first timing profile aided NPCA triggering design, the BT device 114 shares its timing profile PRF to the Wi-Fi device (e.g., non-AP STA) 112, and the Wi-Fi device (e.g., non-AP STA) 112 can transmit a spoofing clear to send (CTS) frame 202 to trigger the NPCA mechanism between the Wi-Fi device (e.g., AP) 104 and the Wi-Fi device (e.g., non-AP STA) 112. Transmission of the spoofing CTS frame 202 is to create the situation where the basic service set (BSS) primary channel is occupied by an overlapping BSS (OBSS) physical layer protocol data unit (PPDU) or an OBSS transmission opportunity (TXOP) . For example, the spoofing CTS frame 202 may be an OBSS CTS frame or a pre-defined NPCA CTS frame (which is recognizable among Wi-Fi devices 104 and 112). Specifically, the BT device 114 decides its BT time window (3ms-300ms), and shares the timing profile PRF (which carries information indicative of the BT time window) to the Wi-Fi device (e.g., non-AP STA) 112. After obtaining the BT time window from the timing profile PRF, the Wi-Fi device (e.g., non-AP STA) 112 decides start time and duration of the NPCA period T_{NPCA} based on the BT time window, and sends out the spoofing CTS frame 202 to trigger the NPCA mechanism between Wi-Fi devices 104 and 112, where the NPCA period T_{NPCA} indicated by the spoofing CTS frame 202 should cover the BT traffic period specified by the BT profile. As shown in FIG. 2, both of the Wi-Fi devices 104 and 112 perform a channel switch operation to switch from the BSS primary channel to an NPCA primary channel, and deal with the Wi-Fi traffic on the NPCA primary channel. During the NPCA period T_{NPCA}, the BT device 114 can transmit/receive the BT traffic on the BSS primary channel, and the Wi-Fi device 112 can transmit/receive the Wi-Fi traffic on the NPCA primary channel, thereby mitigating the IDC interference and improving the BT/Wi-Fi performance.

Regarding the embodiment shown in FIG. 2, the NPCA mechanism between Wi-Fi devices 104 and 112 is triggered by the Wi-Fi device 112 sending the spoofing CTS frame 202. However, this is for illustrative purposes only, and is not meant to be a limitation of the present invention. In an alternative design, the NPCA mechanism between Wi-Fi devices 104 and 112 may be triggered by the Wi-Fi device (e.g., AP) 104 sending the spoofing CTS frame 202, where the timing profile PRF of the BT device 114 may be relayed to the Wi-Fi device 104 through the Wi-Fi device 112.

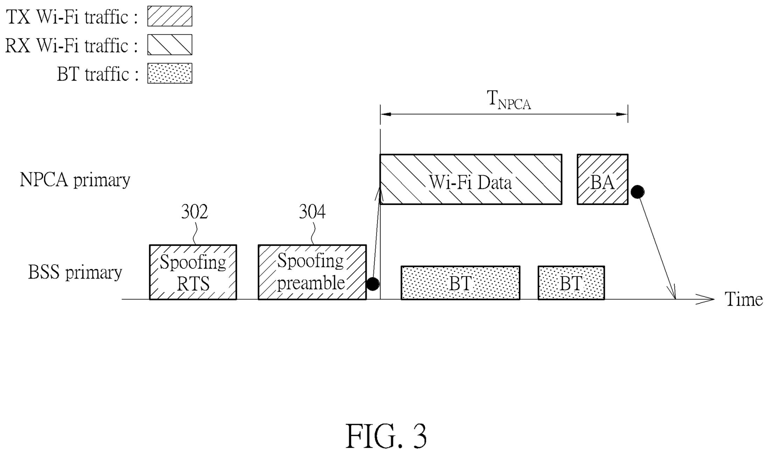

FIG. 3 is a diagram illustrating a second timing profile aided NPCA triggering design according to an embodiment of the present invention. In this embodiment, the Wi-Fi device (e.g., non-AP STA) 112 may trigger/initiate the NPCA mechanism between Wi-Fi devices 104 and 112, and the non-Wi-Fi wireless communication device 114 may be a BT device. Hence, the second timing profile aided NPCA triggering design is used to enable FDD for BT traffic and Wi-Fi traffic during the NPCA period T_{NPCA}. In accordance with the second timing profile aided NPCA triggering design, the BT device 114 shares its timing profile PRF to the Wi-Fi device (e.g., non-AP STA) 112, and the Wi-Fi device (e.g., non-AP STA) 112 can transmit a spoofing request to send (RTS) frame 302 followed by a spoofing preamble (e.g., a preamble of a spoofing data PPDU) 304 to trigger the NPCA mechanism between the Wi-Fi device (e.g., AP) 104 and the Wi-Fi device (e.g., non-AP STA) 112. Transmission of the spoofing RTS frame 302 and the spoofing preamble/data 304 is to create the situation where the BSS primary channel is occupied by an OBSS PPDU or an OBSS TXOP. For example, the spoofing RTS frame 302 may be an OBSS RTS frame or a pre-defined NPCA RTS frame (which is recognizable among Wi-Fi devices 104 and 112). Specifically, the BT device 114 decides its BT time window (3ms-300ms), and shares the timing profile PRF (which carries information indicative of the BT time window) to the Wi-Fi device (e.g., non-AP STA) 112. After obtaining the BT time window from the timing profile PRF, the Wi-Fi device (e.g., non-AP STA) 112 decides start time and duration of the NPCA period T_{NPCA} based on the BT time window, and sequentially sends out the spoofing RTS frame 302 and the spoofing preamble/data 304 to trigger the NPCA mechanism between Wi-Fi devices 104 and 112, where the NPCA period T_{NPCA} indicated by the spoofing RTS frame 302 should cover the BT traffic period specified by the BT profile, and an interval between the spoofing RTS frame 302 and the spoofing preamble/data 304 is 2*SIFS (short interframe space) time plus CTS time (which depends on the rate of the spoofing RTS frame 302). As shown in FIG. 3, both of the Wi-Fi devices 104 and 112 perform a channel switch operation to switch from the BSS primary channel to an NPCA primary channel, and deal with the Wi-Fi traffic on the NPCA primary channel. During the NPCA period T_{NPCA}, the BT device 114 can transmit/receive the BT traffic on the BSS primary channel, and the Wi-Fi device 112 can transmit/receive the Wi-Fi traffic on the NPCA primary channel, thereby mitigating the IDC interference and improving the BT/Wi-Fi performance.

Regarding the embodiment shown in FIG. 3, the NPCA mechanism between Wi-Fi devices 104 and 112 is triggered by the Wi-Fi device 112 sending the spoofing RTS frame 302 and the spoofing preamble/data 304. However, this is for illustrative purposes only, and is not meant to be a limitation of the present invention. In an alternative design, the NPCA mechanism between Wi-Fi devices 104 and 112 may be triggered by the Wi-Fi device (e.g., AP) 104 sending the spoofing RTS frame 302 and the spoofing preamble/data 304, where the timing profile PRF of the BT device 114 may be relayed to the Wi-Fi device 104 through the Wi-Fi device 112.

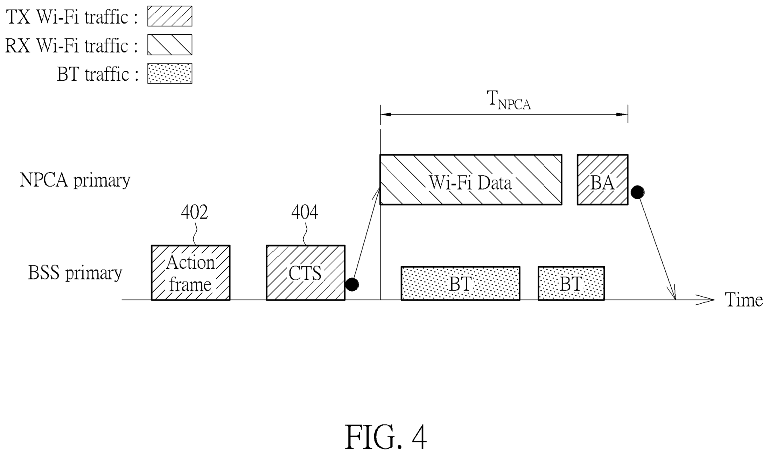

FIG. 4 is a diagram illustrating a third timing profile aided NPCA triggering design according to an embodiment of the present invention. In this embodiment, the Wi-Fi device (e.g., non-AP STA) 112 may trigger/initiate the NPCA mechanism between Wi-Fi devices 104 and 112, and the non-Wi-Fi wireless communication device 114 may be a BT device. Hence, the third timing profile aided NPCA triggering design is used to enable FDD for BT traffic and Wi-Fi traffic during an NPCA period T_{NPCA}. In accordance with the third timing profile aided NPCA triggering design, the BT device 114 shares its timing profile PRF to the Wi-Fi device (e.g., non-AP STA) 112, and the Wi-Fi device (e.g., non-AP STA) 112 can transmit an action frame 402 followed by a CTS frame 404 to the Wi-Fi device (e.g., AP) 104 for triggering the NPCA mechanism between the Wi-Fi device (e.g., AP) 104 and the Wi-Fi device (e.g., non-AP STA) 112, where the action frame 402 carries information allowing the Wi-Fi device 104 to respond to the CTS 404 with NPCA behavior. Other parameters, such as the bandwidth and duration of CTS frame 404, can also be carried in the action frame 402. For example, the action frame 402 may be a pre-defined frame that is recognizable among Wi-Fi devices 104 and 112. Specifically, the BT device 114 decides its BT time window (3ms-300ms), and shares the timing profile PRF (which carries information indicative of the BT time window) to the Wi-Fi device (e.g., non-AP STA) 112. After obtaining the BT time window from the timing profile PRF, the Wi-Fi device (e.g., non-AP STA) 112 decides start time and duration of the NPCA period T_{NPCA} based on the BT time window, and sequentially sends out the action frame 402 and the CTS 404 to trigger the NPCA mechanism between Wi-Fi devices 104 and 112. As shown in FIG. 4, both of the Wi-Fi devices 104 and 112 perform a channel switch operation to switch from the BSS primary channel to an NPCA primary channel, and deal with the Wi-Fi traffic on the NPCA primary channel. During the NPCA period T_{NPCA}, the BT device 114 can transmit/receive the BT traffic on the BSS primary channel, and the Wi-Fi device 112 can transmit/receive the Wi-Fi traffic on the NPCA primary channel, thereby mitigating the IDC interference and improving the BT/Wi-Fi performance.

Regarding the embodiment shown in FIG. 4, the NPCA mechanism between Wi-Fi devices 104 and 112 is triggered by the Wi-Fi device 112 sending the action frame 402 and the CTS frame 404. However, this is for illustrative purposes only, and is not meant to be a limitation of the present invention. In an alternative design, the NPCA mechanism between Wi-Fi devices 104 and 112 may be triggered by the Wi-Fi device (e.g., AP) 104 sending the action frame 402 and the CTS frame 404, where the timing profile PRF of the BT device 114 may be relayed to the Wi-Fi device 104 through the Wi-Fi device 112.

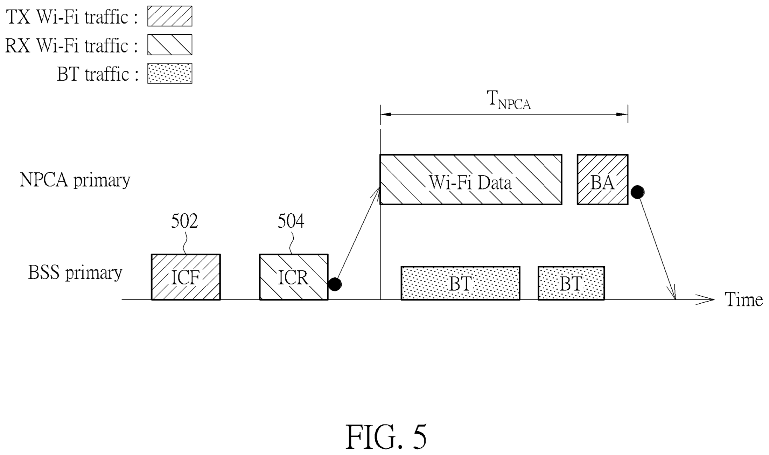

FIG. 5 is a diagram illustrating a fourth timing profile aided NPCA triggering design according to an embodiment of the present invention. In this embodiment, the Wi-Fi device (e.g., non-AP STA) 112 may trigger/initiate the NPCA mechanism between Wi-Fi devices 104 and 112, and the non-Wi-Fi wireless communication device 114 may be a BT device. Hence, the fourth timing profile aided NPCA triggering design is used to enable FDD for BT traffic and Wi-Fi traffic during an NPCA period T_{NPCA}. In accordance with the fourth timing profile aided NPCA triggering design, the BT device 114 shares its timing profile PRF to the Wi-Fi device (e.g., non-AP STA) 112, and then the Wi-Fi device (e.g., non-AP STA) 112 can share the timing profile PRF to the Wi-Fi device (e.g., AP) 104, such that the NPCA mechanism between the Wi-Fi device (e.g., AP) 104 and the Wi-Fi device (e.g., non-AP STA) 112 is triggered by a pre-defined timestamp indicative of a start time of the NPCA period T_{NPCA}.

In this embodiment, the Wi-Fi device (e.g., non-AP STA) 112 transmits an initial control frame (ICF) 502 to the Wi-Fi device (e.g., AP) 104, and receives an initial control response (ICR) 504 from the Wi-Fi device (e.g., AP) 104. For example, the ICF 502 may be used to carry the pre-defined timestamp indicative of the start time of the NPCA period T_{NPCA}. Specifically, the BT device 114 decides its BT time window (3ms-300ms), and shares the timing profile PRF (which carries information indicative of the BT time window) to the Wi-Fi device (e.g., non-AP STA) 112. After obtaining the BT time window from the timing profile PRF, the Wi-Fi device (e.g., non-AP STA) 112 decides start time and duration of the NPCA period T_{NPCA} based on the BT time window, and sends out parameters to the Wi-Fi device (e.g., AP) 104, where the parameters include the pre-defined timestamp, and the NPCA period T_{NPCA} indicated by parameters should cover the BT traffic period specified by the BT profile. As shown in FIG. 5, both of the Wi-Fi devices 104 and 112 perform a channel switch operation to switch from the BSS primary channel to an NPCA primary channel, and deal with the Wi-Fi traffic on the NPCA primary channel. During the NPCA period T_{NPCA}, the BT device 114 can transmit/receive the BT traffic in the BSS primary channel, and the Wi-Fi device 112 can transmit/receive the Wi-Fi traffic on the NPCA primary channel, thereby mitigating the IDC interference and improving the BT/Wi-Fi performance.

Regarding the embodiment shown in FIG. 5, the NPCA mechanism between Wi-Fi devices 104 and 112 is triggered by the Wi-Fi device 112 sending the ICF 502. However, this is for illustrative purposes only, and is not meant to be a limitation of the present invention. In an alternative design, the NPCA mechanism between Wi-Fi devices 104 and 112 may be triggered by the Wi-Fi device (e.g**.**, AP) 104 sending the ICR 504, where the timing profile PRF of the BT device 114 may be relayed to the Wi-Fi device 104 through the ICF 502 sent from the Wi-Fi device 112. In other words, the ICF 502 may carry the timing profile PRF, and the ICR 504 may be used to carry the pre-defined timestamp indicative of the start time of the NPCA period T_{NPCA}.

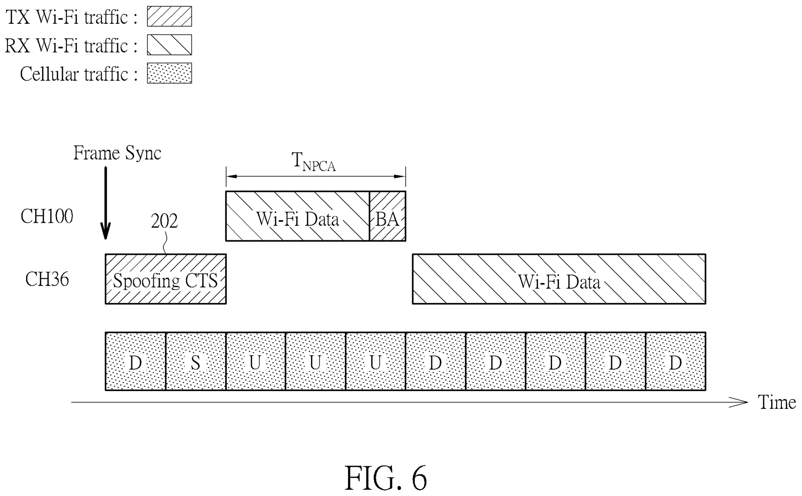

FIG. 6 is a diagram illustrating a fifth timing profile aided NPCA triggering design according to an embodiment of the present invention. In this embodiment, the Wi-Fi device (e.g., non-AP STA) 112 may trigger/initiate the NPCA mechanism between Wi-Fi devices 104 and 112, and the non-Wi-Fi wireless communication device 114 may be a cellular device. Hence, the fifth timing profile aided NPCA triggering design is used to enable FDD for cellular traffic and Wi-Fi traffic during an NPCA period T_{NPCA}. In accordance with the fifth timing profile aided NPCA triggering design, the cellular device 114 shares its timing profile PRF to the Wi-Fi device (e.g., non-AP STA) 112 and further provides frame sync information to the Wi-Fi device (e.g., non-AP STA) 112, the Wi-Fi device **(e.g.,** non-AP STA) 112 can align its frame timing with that of the cellular device 114 and transmit a spoofing CTS frame 202 to trigger the NPCA mechanism between the Wi-Fi device (e.g., AP) 104 and the Wi-Fi device (e.g., non-AP STA) 112. As mentioned above, transmission of the spoofing CTS frame 202 is to create the situation where the BSS primary channel CH36 is occupied by an OBSS PPDU or an OBSS TXOP. For example, the spoofing CTS frame 202 may be an OBSS CTS frame or a pre-defined NPCA CTS frame (which is recognizable among Wi-Fi devices 104 and 112). Specifically, a modem (MD) of the cellular device 114 decides its time division duplexing (TDD) UL/DL configuration with a base station (e.g., eNodeB or gNodeB), and shares the timing profile PRF (which carries information indicative of the TDD UL/DL configuration) and the frame sync information to the Wi-Fi device (e.g., non-AP STA) 112. After obtaining the cellular UL time (labeled by "U" in FIG. 6) from the timing profile PRF and being timing-aligned with the cellular device 114, the Wi-Fi device (e.g., non-AP STA) 112 decides start time and duration of the NPCA period T_{NPCA} based on the cellular UL time, and sends out the spoofing CTS frame 202 to trigger the NPCA mechanism between Wi-Fi devices 104 and 112. As shown in FIG. 6, both of the Wi-Fi devices 104 and 112 perform a channel switch operation to switch from the BSS primary channel CH36 to an NPCA primary channel CH100, and deal with the Wi-Fi traffic on the NPCA primary channel CH100. During the NPCA period T_{NPCA}, the cellular device 114 can transmit/receive the cellular traffic on the BSS primary channel CH36, and the Wi-Fi device 112 can transmit/receive the Wi-Fi traffic on the NPCA primary channel CH100, thereby mitigating the IDC interference and improving the cellular/Wi-Fi performance.

Regarding the embodiment shown in FIG. 6, the NPCA mechanism between Wi-Fi devices 104 and 112 is triggered by the Wi-Fi device 112 sending the spoofing CTS frame 202. However, this is for illustrative purposes only, and is not meant to be a limitation of the present invention. In an alternative design, the NPCA mechanism between Wi-Fi devices 104 and 112 may be triggered by the Wi-Fi device (e.g., AP) 104 sending the spoofing CTS frame 202, where the timing profile PRF of the cellular device 114 may be relayed to the Wi-Fi device 104 through the Wi-Fi device 112.

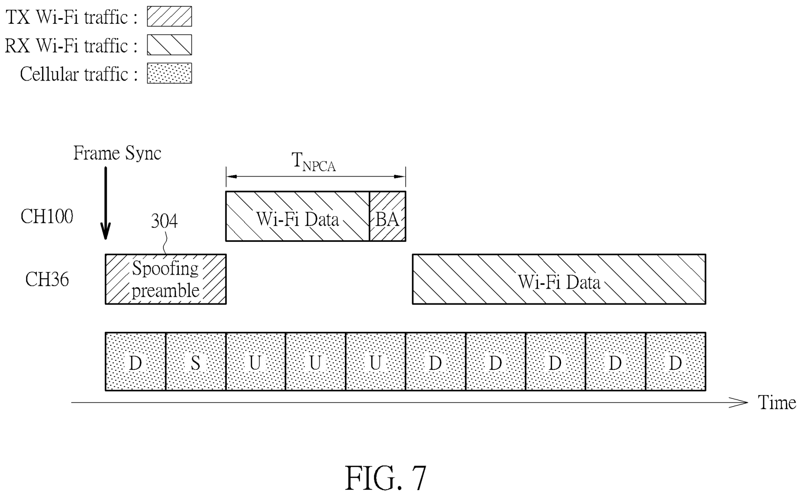

FIG. 7 is a diagram illustrating a sixth timing profile aided NPCA triggering design according to an embodiment of the present invention. In this embodiment, the Wi-Fi device (e.g., non-AP STA) 112 may trigger/initiate the NPCA mechanism between Wi-Fi devices 104 and 112, and the non-Wi-Fi wireless communication device 114 may be a cellular device. Hence, the sixth timing profile aided NPCA triggering design is used to enable FDD for cellular traffic and Wi-Fi traffic during an NPCA period T_{NPCA}. In accordance with the sixth timing profile aided NPCA triggering design, the cellular device 114 shares its timing profile PRF to the Wi-Fi device (e.g., non-AP STA) 112 and further provides frame sync information to the Wi-Fi device (e.g., non-AP STA) 112, the Wi-Fi device (e.g., non-AP STA) 112 can align its frame timing with that of the cellular device 114 and transmit a spoofing RTS frame 302 followed by a spoofing preamble/data 304 to trigger the NPCA mechanism between the Wi-Fi device (e.g., AP) 104 and the Wi-Fi device (e.g., non-AP STA) 112. As mentioned above, transmission of the spoofing RTS frame 302 and the spoofing preamble/data 304 is to create the situation where the BSS primary channel CH36 is occupied by an OBSS PPDU or an OBSS TXOP. For example, the spoofing RTS frame 302 may be an OBSS RTS frame or a pre-defined NPCA RTS frame (which is recognizable among Wi-Fi devices 104 and 112). For brevity and simplicity, only the spoofing preamble 304 is illustrated in FIG. 7. Specifically, the MD of the cellular device 114 decides its TDD UL/DL configuration with a base station (e.g., eNodeB or gNodeB), and shares the timing profile PRF (which carries information indicative of the TDD UL/DL configuration) and the frame sync information to the Wi-Fi device (e.g., non-AP STA) 112. After obtaining the cellular UL time (labeled by "U" in FIG. 7) from the timing profile PRF and being timing-aligned with the cellular device 114, the Wi-Fi device (e.g., non-AP STA) 112 decides start time and duration of the NPCA period T_{NPCA} based on the cellular UL time, and sends out the spoofing RTS frame 302 and the spoofing preamble/data 304 to trigger the NPCA mechanism between Wi-Fi devices 104 and 112. As shown in FIG. 7, both of the Wi-Fi devices 104 and 112 perform a channel switch operation to switch from the BSS primary channel CH36 to an NPCA primary channel CH100, and deal with the Wi-Fi traffic on the NPCA primary channel CH100. During the NPCA period T_{NPCA}, the cellular device 114 can transmit/receive the cellular traffic on the BSS primary channel CH36, and the Wi-Fi device 112 can transmit/receive the Wi-Fi traffic on the NPCA primary channel CH100, thereby mitigating the IDC interference and improving the cellular/Wi-Fi performance.

Regarding the embodiment shown in FIG. 7, the NPCA mechanism between Wi-Fi devices 104 and 112 is triggered by the Wi-Fi device 112 sending the spoofing RTS frame 302 and the spoofing preamble 304. However, this is for illustrative purposes only, and is not meant to be a limitation of the present invention. In an alternative design, the NPCA mechanism between Wi-Fi devices 104 and 112 may be triggered by the Wi-Fi device (e.g., AP) 104 sending the spoofing RTS frame 302 and the spoofing preamble 304, where the timing profile PRF of the cellular device 114 may be relayed to the Wi-Fi device 104 through the Wi-Fi device 112.

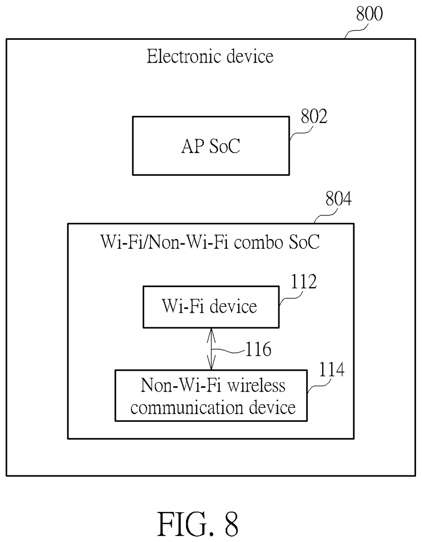

In above embodiments, the Wi-Fi device 112 and the non-Wi-Fi wireless communication device (e.g., BT device) 114 co-exist in the same electronic device 102. For example, the electronic device 102 may be a customer premise equipment (CPE) or a mobile Wi-Fi (MiFi). However, this is for illustrative purposes only, and is not meant to be a limitation of the present invention. In practice, the present invention has no limitations on the co-existence design of the Wi-Fi device 112 and the non-Wi-Fi wireless communication device 114. In some embodiments of the present invention, the Wi-Fi device 112 and the non-Wi-Fi wireless communication device 114 may be integrated in a single chip. FIG. 8 is a diagram illustrating an electronic device according to an embodiment of the present invention. The electronic device 102 shown in FIG. 1 may be replaced by the electronic device 800 shown in FIG. 8. As shown in FIG. 8, the electronic device 800 may include an application processor (AP) system on a chip (SoC) 802 and a Wi-Fi/Non-Wi-Fi combo SoC 804, where the Wi-Fi/Non-Wi-Fi combo SoC 804 may include the Wi-Fi device 112 and the non-Wi-Fi wireless communication device (e.g., BT device) 114. For example, the electronic device 800 may be a smartphone. In summary, any electronic device having a Wi-Fi device using the proposed timing profile aided NPCA triggering design falls within the scope of the present invention.

## Claims

1. A Wi-Fi device (112, 104) **characterized by**:
a wireless interface circuit (134, 124); and
a control circuit (132, 122), configured to receive a timing profile of scheduled traffic of a non-Wi-Fi wireless communication device (114), and refer to the timing profile to instruct the wireless interface circuit (134, 124) to transmit at least one frame for triggering a non-primary channel access , hereinafter referred to as NPCA, mechanism between the Wi-Fi device (112, 104) and another Wi-Fi device (104, 112).

2. A Wi-Fi non-primary channel access, hereinafter referred to as NPCA, method **characterized by**:
receiving, by a first Wi-Fi device (112, 104), a timing profile of scheduled traffic of a non-Wi-Fi wireless communication device (114); and
referring to the timing profile to transmit at least one frame from the first Wi-Fi device (112, 104) for triggering an NPCA mechanism between the first Wi-Fi device (112, 104) and a second Wi-Fi device (104, 112).

3. The Wi-Fi device (112, 104) of claim 1 or the Wi-Fi NPCA method of claim 2, **characterized in that** the at least one frame comprises a spoofing clear to send frame.

4. The Wi-Fi device (112, 104) of claim 1 or the Wi-Fi NPCA method of claim 2, **characterized in that** the at least one frame comprises a spoofing request to send frame followed by a spoofing preamble.

5. The Wi-Fi device (112, 104) of claim 1 or the Wi-Fi NPCA method of claim 2, **characterized in that** the at least one frame comprises an action frame followed by a clear to send, hereinafter referred to as CTS, frame, and the action frame carries information allowing the another Wi-Fi device (104, 112) to respond to the CTS with NPCA behavior.

6. The Wi-Fi device (112, 104) of claim 1 or the Wi-Fi NPCA method of claim 2, **characterized in that** the at least one frame carries a pre-defined timestamp indicative of a start time of the NPCA mechanism.

7. The Wi-Fi device (112, 104) of claim 6 or the Wi-Fi NPCA method of claim 6, **characterized in that** the at least one frame comprises an initial control frame or an initial control response.

8. The Wi-Fi device (112) of claim 1, **characterized in that** the Wi-Fi device (112) and the non-Wi-Fi wireless communication device (114) co-exist in a same electronic device (102, 800).

9. The Wi-Fi device (104) of claim 1, **characterized in that** the another Wi-Fi device (112) and the non-Wi-Fi wireless communication device (114) co-exist in a same electronic device (102, 800).

10. The Wi-Fi device (112, 104) of claim 1, **characterized in that** the Wi-Fi device (112, 104) is an access point, and the another Wi-Fi device (104, 112) is a non-access point station.

11. The Wi-Fi device (112, 104) of claim 1, **characterized in that** the another Wi-Fi device (104, 112) is an access point, and the Wi-Fi device (112, 104) is a non-access point station.

12. The Wi-Fi NPCA method of claim 2, **characterized in that** the first Wi-Fi device (112) and the non-Wi-Fi wireless communication device (114) co-exist in a same electronic device (102, 800).

13. The Wi-Fi NPCA method of claim 2, **characterized in that** the second Wi-Fi device (112) and the non-Wi-Fi wireless communication device (114) co-exist in a same electronic device (102, 800).

14. The Wi-Fi NPCA method of claim 2, **characterized in that** the first Wi-Fi device (112, 104) is an access point, and the second Wi-Fi device (104, 112) is a non-access point station.

15. The Wi-Fi NPCA method of claim 2, **characterized in that** the second Wi-Fi device (104, 112) is an access point, and the first Wi-Fi device (112, 104) is a non-access point station.
